# EUROPEAN PATENT APPLICATION

(11) **EP 4 432 776 A1**
(43) Date of publication of application: **18.09.2024**
(21) Application number: 23887148.7
(22) Date of filing: 27.12.2023
(51) Int. Cl.: H05B 3/02, H01M 10/615, H01M 10/617, H01M 10/657, H01M 10/6551, H01M 10/6568, H01M 10/6556, H01M 10/625, H01M 10/42

(54) **ELECTRIC HEATER, THERMAL MANAGEMENT SYSTEM, ELECTRIC VEHICLE AND ENERGY STORAGE SYSTEM**

(30) Priority: 27.12.2022 CN 202211691711; 07.04.2023 CN 202310366186
(71) Applicant: Zhenjiang Helmholtz Heat Transfer Trans System Co., Ltd., Zhenjiang, Jiangsu 212002 (CN)
(72) Inventor: XU, Jian, Zhenjiang, Jiangsu 212002 (CN); YANG, Cheng, Zhenjiang, Jiangsu 212002 (CN); ZHANG, Zheng, Zhenjiang, Jiangsu 212002 (CN); SHEN, Zhiwen, Zhenjiang, Jiangsu 212002 (CN); REN, Yingmu, Zhenjiang, Jiangsu 212002 (CN); WANG, Peng, Zhenjiang, Jiangsu 212002 (CN); WEI, Xianyu, Zhenjiang, Jiangsu 212002 (CN); CHANG, Tao, Zhenjiang, Jiangsu 212002 (CN); JIANG, Yi, Zhenjiang, Jiangsu 212002 (CN)
(74) Representative: SSM Sandmair
(86) International application number: PCT/CN2023/142516
(87) International publication number: WO 2024/140856

(57) **Abstract**

The present application discloses an electric heater, a thermal management system, an electric vehicle, and an energy storage system, wherein the electric heater comprises a heating cavity assembly (100), the heating cavity assembly (100) comprises a cavity cover plate (110), a cavity bottom plate (120) and a fin plate (130) arranged between the cavity cover plate (110) and the cavity bottom plate (120), the fin plate (130) includes a plurality of flow channel areas spaced from each other, and the cavity cover plate (110) is provided with spaced isolation grooves (111) corresponding to the interval of the flow channel areas. In the present application, the isolation grooves can be used to accurately position the corresponding flow channel areas, thereby ensuring accurate positioning of the fin plate relative to the cavity cover plate and the cavity bottom plate before performing fixed connection. In addition, since the isolation grooves may act as reinforcing ribs on the cavity cover plate, the overall rigidity of the heating cavity assembly can be improved.

## Description

### Technical Field

The present application relates to the field of electric heating, and more particularly relates to an electric heater, a thermal management system, an electric vehicle, and an energy storage system.

### Background

A heating cavity assembly of an electric heater typically includes components such as a cavity cover plate, a cavity bottom plate, and fins forming a flow channel, and the components need to be fixed, and especially the fins need to be accurately positioned in advance in a flow channel cavity which is formed between the cavity cover plate and the cavity bottom plate. It is commonly used in the prior art to place a plurality of fins respectively into spaced flow channel cavities. This results in a significant increase in a workload of fin processing and assembly of the heating cavity assembly. And due to insufficient limit constraints, the fin positioning accuracy is relatively low, thereby affecting the temperature equalization and service life of a heating element.

In addition, with the increasing demand for light weight of the electric heater, the thickness of plate members such as the cavity cover plate, the cavity bottom plate, etc. decreases, resulting in a decrease in the overall rigidity of the electric heater.

Therefore, how to perform accurate positioning before fixedly connecting the components and improve the rigidity becomes a technical problem to be solved by the present application.

### Summary

In view of this, the present application provides an electric heater, comprising a heating cavity assembly, wherein the heating cavity assembly comprises a cavity cover plate, a cavity bottom plate and a fin plate arranged between the cavity cover plate and the cavity bottom plate, the fin plate includes a plurality of flow channel areas spaced apart from each other, and the cavity cover plate is provided with spaced isolation grooves corresponding to the interval of the flow channel areas.

Alternatively, the cavity cover plate is fixed at least to a top of the fin plate.

Alternatively, the cavity cover plate divides a cavity between the cavity cover plate and the cavity bottom plate into a plurality of primary fluid channels C21 by the isolation grooves, and a plurality of secondary fluid channels C22 is formed in each primary fluid channel C21 by the fin plate.

Alternatively, the cavity comprises an inlet flow channel and an outlet flow channel, the cavity cover plate is provided with an inlet communicating with the inlet flow channel and an outlet communicating with the outlet flow channel, and the cavity cover plate is provided with a guide structure for guiding a fluid medium from the inlet flow channel to uniformly flow to each of the primary fluid channels C21.

Alternatively, the guide structure includes a first guide slot extending from one end of the cavity cover plate towards the other end.

Alternatively, the depth of the first guide slot is small than the height of the fin plate and/or the first guide slot is gradually closer to an edge of the inlet flow channel from said one end of the cavity cover plate towards said other end.

Alternatively, an end of the first guide slot is spaced apart from an end of the inlet flow channel, and a second guide slot for blocking the fluid medium is arranged between the end of the first guide slot and the end of the inlet flow channel; and/or, the first guide slot has portions with different depths along the extension direction of the first guide slot.

Alternatively, the fin plate includes a plurality of rows of fins extending in a length direction, and adjacent rows of the fins is staggered.

Alternatively, the cavity cover plate is provided with end grooves distributed at both ends of the fin plate, and the end grooves are fixed to the cavity bottom plate to separate the inlet flow channel from the outlet flow channel.

Alternatively, the electric heater comprises an upper cover disposed at an upper side of the heating cavity assembly, a lower cover disposed at a lower side of the heating cavity assembly, a heating element disposed between the heating cavity assembly and the lower cover, a PCB assembly disposed between the heating cavity assembly and the upper cover, a blade type high-voltage connector connected to the PCB assembly in a manner of passing through the upper cover, and an electrode connecting the heating element and the PCB assembly, wherein the cavity cover plate and the cavity bottom plate are each provided with an electrode via hole for allowing the electrode to pass through.

Alternatively, the cavity cover plate, the cavity bottom plate and the fin plate are all stamped parts and fixed to each other by brazing.

The present application further provides a thermal management system, comprising the electric heater of the present application.

The present application further provides an electric vehicle, comprising the thermal management system of the present application, the electric vehicle being a hybrid vehicle or a pure electric vehicle.

The present application further provides an energy storage system, comprising the thermal management system of the present application, the energy storage system being an electrochemical energy storage system employing a storage battery.

According to the technical solution of the present application, the isolation grooves can be used to accurately position the corresponding flow channel areas, thereby ensuring accurate positioning of the fin plate relative to the cavity cover plate and the cavity bottom plate before performing fixed connection. In addition, since the isolation grooves may act as reinforcing ribs on the cavity cover plate, the overall rigidity of the heating cavity assembly can be improved.

Other features and advantages of the present application will be described in detail in the subsequent detailed description.

### Brief Description of Figures

The accompanying drawings, which form a part of the present application, are intended to provide a further understanding of the present application, and illustrative embodiments of the present application and their description serve to explain the present application. In the drawings:
FIG. 1 is a perspective view of an electric heater according to an embodiment of the present application;
FIG. 2 is a perspective view of the electric heater in FIG. 1,wherein an upper cover and a lower cover are removed;
FIG. 3 is a perspective view of a main body portion of the electric heater in FIG. 2;
FIG. 4 is a perspective view of a heating cavity assembly in FIG. 3;
FIG. 5 is a view of FIG. 3, wherein a cavity cover plate is removed;
FIG. 6 is a top view of a cavity cover plate according to an embodiment of the present application;
FIG. 7 is a bottom view of FIG. 2;
FIG. 8 is a cross-sectional view of FIG. 1;
FIG. 9 is a cross-sectional view of FIG. 2;
FIG. 10 is a partial cross-sectional view showing a primary fluid channel of FIG. 4;
FIG. 11 is a partial cross-sectional view showing a secondary fluid channel of FIG. 4;
FIG. 12 is a partial cross-sectional view of a heating cavity assembly according to another embodiment of the present application;
FIG. 13 is a top view of a cavity cover plate according to another embodiment of the present application;
FIG. 14 is a cross-sectional view of the heating cavity assembly of FIG. 4, wherein a first guide slot has a plurality of sections; and
FIG. 15 is a view illustrating a cross-sectional shape of a flow channel unit in FIG. 11.

### Detailed Description

The technical solutions of the present application will be described in detail below with reference to the accompanying drawings and in combination with the embodiments.

According to one aspect of the present application, an electric heater is provided, the electric heater comprise a heating cavity assembly 100, wherein the heating cavity assembly 100 includes a cavity cover plate 110, a cavity bottom plate 120 and a fin plate 130 arranged between the cavity cover plate 110 and the cavity bottom plate 120, the fin plate 130 includes a plurality of flow channel areas spaced apart from each other, and the cavity cover plate 110 is provided with spaced isolation grooves 111 corresponding to the interval of the flow channel areas.

The electric heater of the present application may utilize the isolation grooves 111 to accurately position the corresponding flow channel areas, thereby ensuring accurate positioning of the fin plate 130 relative to the cavity cover plate 110 and the cavity bottom plate 120 before performing fixed connection. In addition, since the isolation grooves 111 may act as reinforcing ribs on the cavity cover plate 110, the overall rigidity of the heating cavity assembly can be improved.

In the present application, the fin plate 130 is provided with fins for forming fluid channels. Wherein the fin plate 130 is an integral member so as to be integrally positioned with respect to the cavity cover plate 110 and the cavity bottom plate 120. The fins may have various shapes, such as a trapezoid, a rectangle, or a groove shape to form a water corrugated fin plate 130.

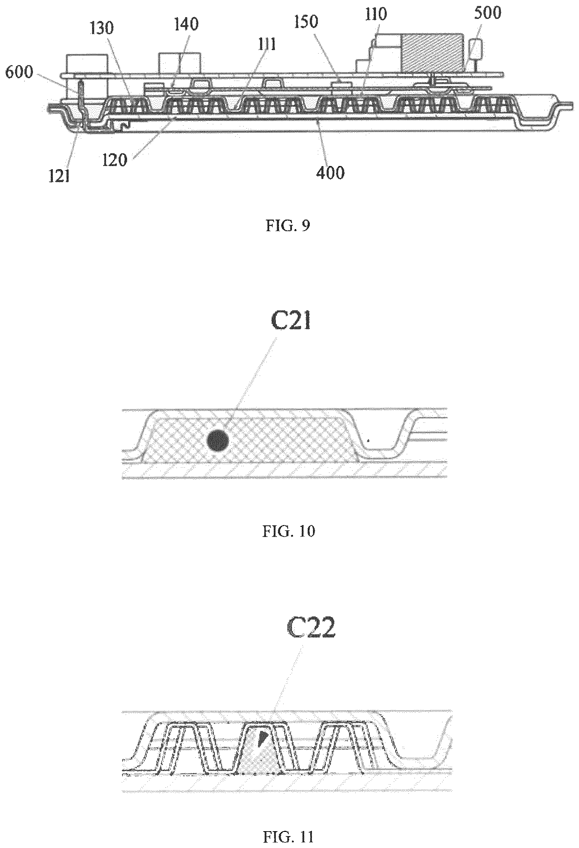

Preferably, by suitably setting the structure of the fin plate 130 in combination with the partition positioning of the isolation grooves 111, a better heat exchange effect can be obtained. In particular, the cavity cover plate 110 may divide a cavity between the cavity cover plate 110 and the cavity bottom plate 120 into a plurality of primary fluid channels C21 (as shown in FIG. 10) by the isolation grooves 111, and a plurality of secondary fluid channels C22 (as shown in FIG. 11) are formed in each primary fluid channel C21 by the fin plate 130. Thus, the plurality of the primary fluid channels C21 may perform preliminary distribution on a fluid medium flowing into the cavity between the cavity cover plate 110 and the cavity bottom plate 120, and a fluid medium entering each primary fluid channel C21 may be further evenly distributed among the plurality of the secondary fluid channels C22. Moreover, a fluid medium in the same primary fluid channel C21 may be channeled between different secondary fluid channels C22 to increase the impact between the fluid medium and the fins, thereby increasing the turbulence intensity of the fluid and increasing the heat exchange efficiency.

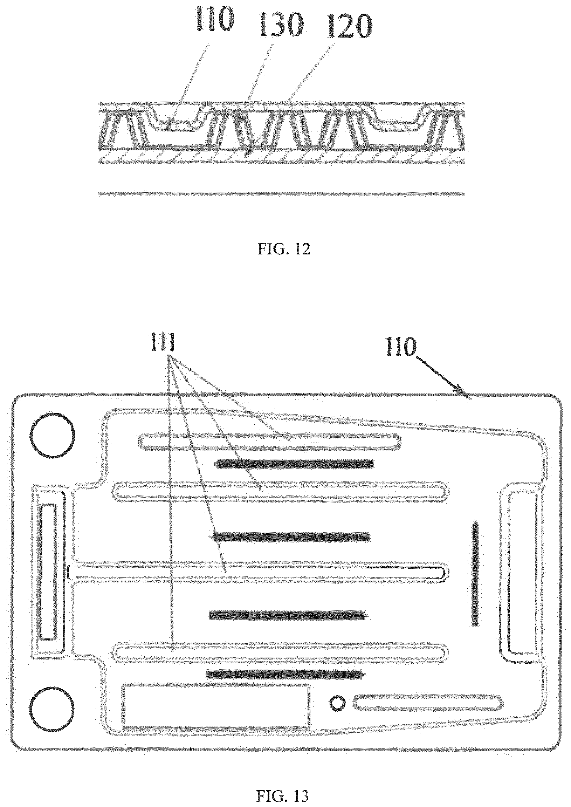

The isolation grooves 111 may be provided depend on a communicating shape of each primary fluid channel C21 (i.e., the shape of a path in which a fluid flows along a communicating sequence of each primary fluid channel C21), for example, as shown in FIG. 13 where the primary fluid channels C21 communicate with each other in a U-shape.

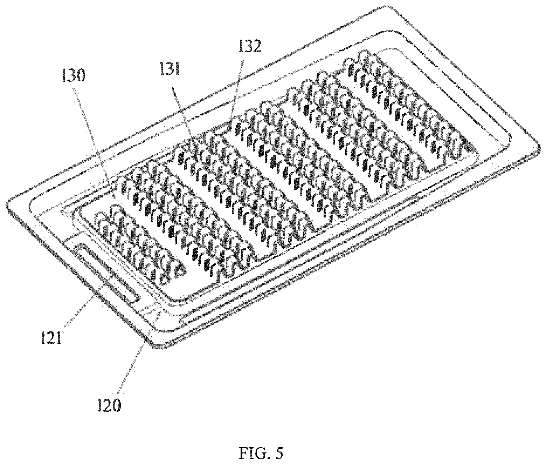

Preferably, as shown in FIGS. 5, 11 and 12, the fin plate includes a plurality of rows of the fins extending in a length direction, and adjacent rows of the fins are staggered.

Wherein the fins may be arranged as desired, for example, as shown in FIG. 5, along the length direction of the fin plate 130, the fin plate 130 may include a fin portion 131 and a connecting portion 132 alternately disposed, the fin portion 131 comprises fins and the width of the connecting portion 132 is matched with the isolation grooves 111 on the cavity cover plate 110. Wherein each row of fins is arranged along the length direction of the fin plate 130, and adjacent rows of the fins are staggered (not perfectly aligned) along a width direction of the fin plate 130. That is, each secondary fluid channel C22 is formed by the fins which are staggered, and flow channels formed on two adjacent fins are only partially aligned in a cross section along the extension direction of each secondary fluid channel C22, so that an impact will occur once a fluid passes through one fin, thereby increasing the turbulence intensity of the fluid and increasing the heat exchange efficiency.

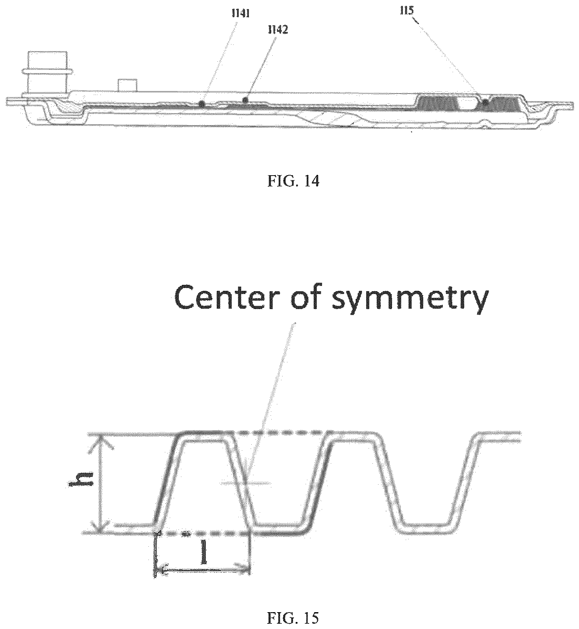

In addition, a single row of fins is composed of a plurality of channel units which are arranged in sequence, with adjacent channel units in an inverted position relationship with each other. Preferably, two adjacent channel units form a cross section of a parallelogram and form a symmetry about the center of the parallelogram, which facilitates flow equalization of a fluid medium passing through the secondary fluid channels. For example, in an embodiment shown in FIG. 15, a cross-sectional shape of each channel unit is trapezoidal, and cross sections of two adjacent channel units are each trapezoidal and together form a cross section of a parallelogram, the two trapezoids being symmetrical about the center of the parallelogram. Of course, the channel units may also be formed in cross sections of other shapes, for example, a rectangular cross section may be formed so that two adjacent channel units each have a small rectangular cross section and together form a cross section of a large rectangle (also a parallelogram), the small rectangles of the two channel units being symmetrical about the center of the large rectangle.

The fin plate 130 may have a plate thickness of 0.2mm-0.8 mm, and a fin height (i.e., a raised height of each fin) h, and a fin spacing 1 (i.e., a maximum width of a single channel unit, e.g., a width of a lower bottom of a channel unit with a trapezoidal cross section) is 2mm-10 mm, which is specifically determined according to a power and a flow indicator of the electric heater. Preferably, the values of the fin height h and the fin spacing 1 are the same or close to each other.

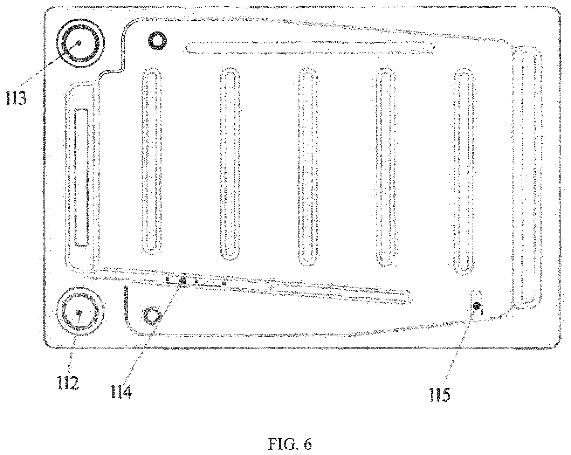

The cavity includes an inlet flow channel and an outlet flow channel, the cavity cover plate 110 is provided with an inlet 112 communicating with the inlet flow channel and an outlet 113 communicating with the outlet flow channel (wherein the inlet 112 and the outlet 113 may be disposed at one side of the heating cavity assembly 100 in a manner shown in FIG. 6 or may be diagonally distributed, which is not limited herein), and the electric heater may be provided with a medium inlet 700 at the inlet 112 and a medium outlet 800 at the outlet 113. A fluid medium may enter the inlet flow channel through the inlet 112 and is dispersed into the primary fluid channels C21, then into the secondary fluid channels C22, then merge into the outlet flow channel and out of the cavity from the outlet 113. In order to prevent most of the fluid medium from flowing through the primary fluid channel C21 close to the inlet 112, which results in insufficient heat exchange, preferably, the cavity cover plate 110 is provided with a guide structure for guiding the medium in the inlet flow channel to uniformly flow to each of the primary fluid channels C21, such that the fluid medium may flow sufficiently through most of the space within the cavity so that heat exchange can be sufficiently carried out, and damage caused by dry burning of the primary fluid channel C21 and the secondary fluid channels C22 away from the inlet 112 is avoided.

Wherein the guide structure may provided in a suitable form as long as being able to guide the fluid medium to sufficiently flow through the flow channels of the fin plate. Preferably, as shown in FIG. 6, the guide structure includes a first guide slot 114 extending from one end of the cavity cover plate 110 toward the other end. The first guide slot 114 is recessed into the cavity from the cavity cover plate 110 and into the inlet flow channel such that the fluid medium in the inlet flow channel needs to cross the first guide slot 114 below the first guide slot 114 before entering the primary fluid channels C21 and the secondary fluid channels C22. Therefore, the fluid medium may enter each primary fluid channel C21 more uniformly along the extension direction of the first guide slot 114, and the fluid distribution uniformity is improved.

It will be appreciated that in order to ensure that the fluid medium may cross the first guide slot 114 below the first guide slot 114, the depth of the first guide slot 114 should be smaller than the height of the fin plate 130. In addition, the first guide slot 114 extends substantially in the longitudinal direction of the cavity cover plate 110, thereby serving as a longitudinal reinforcing rib to enhance the longitudinal rigidity of the cavity cover plate 110 and the heating cavity assembly 100.

In addition, in the inlet flow channel, the fluid medium in the medium flow channel gradually decreases as it moves away from the inlet 112, in order to ensure that the fluid medium may enter each primary fluid channel C21 at each location of the inlet flow channel by crossing below the first guide slot 114, preferably, as shown in FIG. 6, the first guide slot 114 is gradually closer to an edge of the inlet flow channel from said one end of the cavity cover plate 110 towards the other end. Thus, a receiving space for the fluid medium to cross the first guide slot 114 can be defined by the first guide slot 114 and the edge of the inlet flow channel, and by gradually narrowing the receiving space from the one end toward the other end, a flow rate of the fluid gradually decreasing with the extension of the inlet flow channel is increased to balance a flux of the fluid between the primary fluid channels C21. The extension length of the first guide slot 114 may be designed as desired, for example, the first guide slot 114 may extend to a primary fluid channel C21 that is farthest or second furthest from the inlet 112.

An end of the first guide slot 114 is spaced apart from an end of the inlet flow channel. In order to prevent most of the fluid medium reaching the end of the first guide slot 114 from entering the last secondary fluid channel C22 (e.g., the rightmost secondary fluid channel C22 in the primary fluid channel C21 corresponding to the rightmost isolation groove 111 in FIG. 6), resulting in excessive flow in the last secondary fluid channel C22, a fluid downstream of the inlet flow channel can be diverted in a suitable manner.

Preferably, as shown in FIGS. 6 and 14, a second guide slot 115 for blocking a fluid medium is arranged between the end of the first guide slot 114 and the end of the inlet flow channel. The second guide slot 15 may extend from the edge of the inlet flow channel towards the inner side of the inlet flow channel, and for example, may extend in a direction perpendicular to the extension direction of the inlet flow channel. The second guide slot 115 may be arranged at an appropriate position, for example, between the end of the first guide slot 114 and the end of the inlet flow channel, so that a fluid medium reaching the end of the first guide slot 114 may enter the fluid channels corresponding to the downstream of the inlet flow channel more uniformly. Wherein the specific location and extension distance of the second guide slot 115 can be set according to the specific arrangements of the primary fluid channels C21 and the secondary fluid channels C22.

In addition, the first guide slot 114 may have portions with different depths along the extension direction of the first guide slot 114. A portion of the first guide slot 114 having a smaller depth allows a fluid medium to cross the first guide slot 114 more easily to enter the primary fluid channels C21 to balance a flux of the fluid medium passing through each primary fluid channel. The first guide slot 114 may be provided with portions with different depths in an appropriate manner. For example, the first guide slot 114 may have a plurality of sections, such as a first section 1141 having a first depth and a second section 1142 having a second depth shown in FIG. 14, the first section 1141 and the second section 1142 are alternately disposed along the extension direction, and the length of each section, the number of sections, and the like may be set as desired.

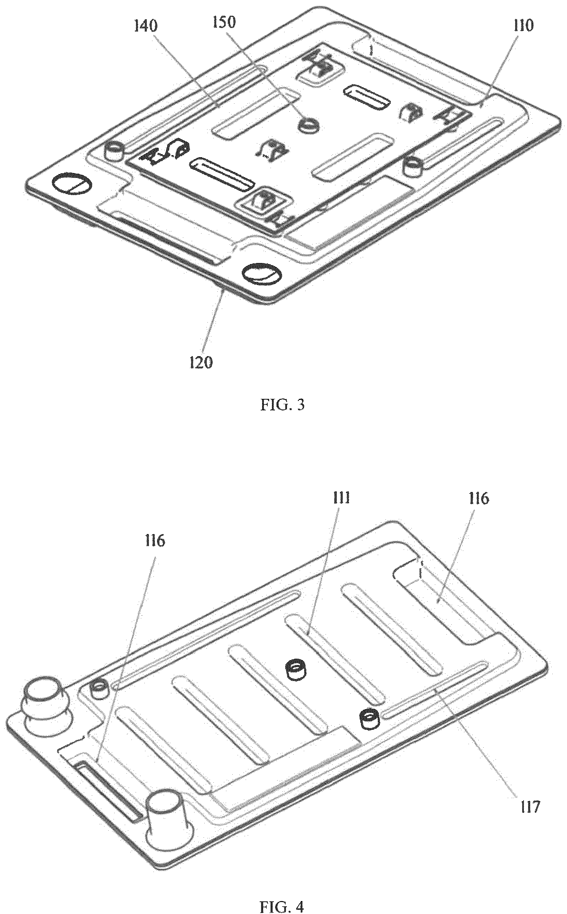

As shown in FIG. 4, the cavity cover plate 110 may be provided with end grooves 116 distributed at both ends of the fin plate 130, and the end grooves 116 is fixed to the cavity bottom plate 120 to separate the inlet flow channel from the outlet flow channel, so as to avoid most of the fluid medium passing through an end with less pressure loss.

In an electric heater in the prior art, a high-voltage connector is disposed at one end of a heating cavity assembly in a length direction. Since cables are not easily bent, in order to facilitate connection, a large space area is provided at a front end of a heating cavity to accommodate the cables and electrodes of the high-voltage connector. The provision of the larger space area, on one hand, increases the overall size of the electric heater, and on the other hand, has a significant adverse effect on the overall rigidity.

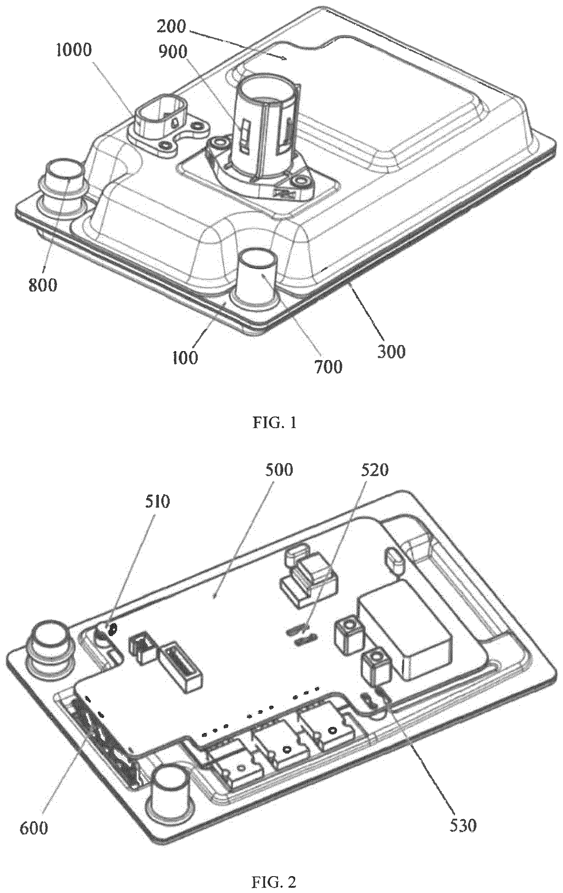

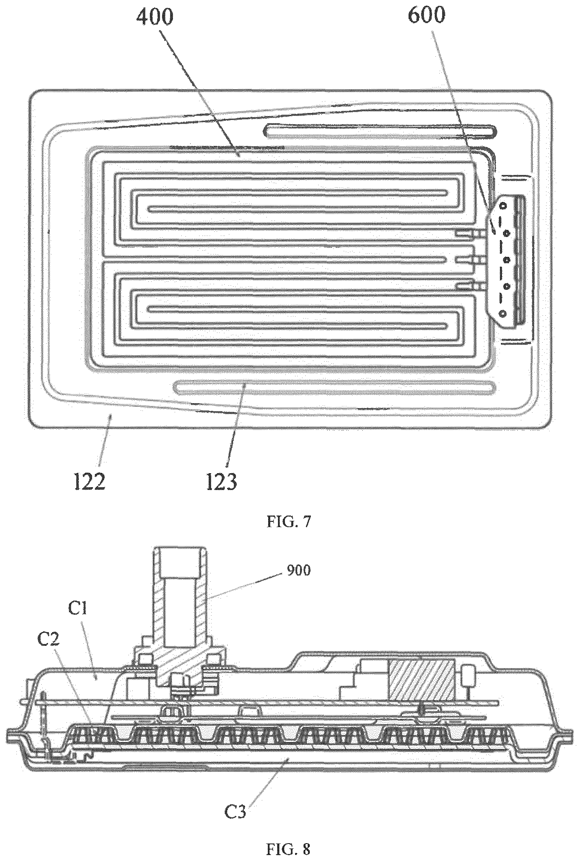

Preferably, as shown in FIGS. 1, 2, and 7 to 9, the electric heater may comprise an upper cover 200 disposed at an upper side of the heating cavity assembly 100, a lower cover 300 disposed at a lower side of the heating cavity assembly 100, a heating element 400 disposed between the heating cavity assembly 100 and the lower cover 300, a PCB assembly 500 disposed between the heating cavity assembly 100 and the upper cover 200, a blade type high-voltage connector 900 connected to the PCB assembly 500 in a manner of passing through the upper cover 200, and an electrode 600 connecting the heating element 400 and the PCB assembly 500, wherein the cavity cover plate 110 and cavity bottom plate 120 are each provided with an electrode via hole 121 for allowing the electrode 600 to pass through. In the present application, the blade type high-voltage connector 900 is disposed in a manner of passing through the upper cover 200 with its jont directly inserted into the PCB assembly 500 of the heater, so that no cable is provided, and it is only needed to provide the electrode via holes 121 for allowing the electrode 600 to pass through on the cavity cover plate 110 and the cavity bottom plate 120. The electrode via holes 121 are relatively small, simplifying the structure on one hand, and reducing the adverse effects on the rigidity and strength caused by larger via holes on the other hand. The electrode 600 passes through the electrode via holes 121 and is fixedly connected to the PCB assembly 500 and the heating element 400, respectively. Its current path is from a positive electrode of the high-voltage connector 900 to the PCB assembly 500 to the electrode 600 to the heating element 400, and then to a negative electrode of the high-voltage connector 900 in a reverse order.

The electric heater of the present application can be powered by DC or AC, with a rated operating voltage of DC400V (an actual operating voltage range of 200V-500V), or DC800V (an actual operating voltage range of 320V-850V) or a single-phase voltage, e.g., 220V, or a ployphase voltage, e.g., a three-phase voltage of 380V.

The upper cover 200 and the lower cover 300 may be fixed to the upper side and the lower side of the heating cavity assembly 100 in an appropriate manner. After the upper cover 200 and the lower cover 300 are fixedly connected, three sealed cavities may be formed, i.e., an electrical cavity C1 (for arranging electrical components such as the PCB assembly 500), a fluid cavity C2 (for allowing a fluid medium to flow for heat exchange), and an electric heating cavity C3 (for housing the heating element 400). Wherein the fluid cavity C2 satisfies the liquid sealing requirement, and the electrical cavity C1 and the electric heating cavity C3 communicate with each other through the electrode via holes 121 and satisfy the airtightness requirement.

The heating element 400 may be provided in a suitable form, such as a thin film heating element. Preferably, the heating element 400 is of a four-layer composite structure, which sequentially outward from the cavity bottom plate 120 comprises a first layer of a thermal buffer layer, a second layer of an insulating layer, a third layer of a resistive heat generating layer, and a fourth layer of a covering insulating layer.The layers are tightly bonded by a plasma deposition process. Wherein the thermal buffer layer is made of a material with a thermal expansion coefficient between that of a substrate material and that of a material of the insulating layer to relieve a thermal stress caused by inconsistent expansion of the material when heated, and at the same time, the material of the thermal buffer layer also needs to have a relatively large coefficient of thermal conductivity to avoid excessive thermal resistance when heat is transferred from the resistive heat generating layer to the fluid cavity C2.

In the prior art, the cavity cover plate 110 and the cavity bottom plate 120 are typically made of an aluminum alloy by a high-pressure casting process and connected by welding or fastener. The high-pressure casting process of aluminum alloys has the advantage of being able to form relative complex shapes with the help of a higher filling pressure of molten aluminum. However, due to the melting-solidification process in the filling process, some gas is inevitably introduced, and its main component is hydrogen gas formed by ionization of water vapor at a high temperature, which is easily dissolved in molten aluminum at a high temperature and is precipitated during solidification, so that certain pores are formed in a finished product. Therefore, a die-cast aluminum alloy is actually a porous material having a certain porosity, and its physical and mechanical properties such as the density, rigidity, strength, thermal conductivity, and the like are inferior to those of materials of an aluminum alloy sheet using a rolling process, an aluminum alloy profile using an extrusion forming process, and the like. Meanwhile, a uniform wall thickness is also one of the key points of the high-pressure casting process, otherwise, a shrinkage rate will be inconsistent in various areas due to the difference in the wall thickness, and casting defects such as shrinkage cavities, shrinkage marks, etc. will be formed, and a wall thickness of the die-cast aluminum alloy is generally 2-3 mm. As a heat exchange device in the electric heater, a fluid cavity is provided with a suitable heat dissipation flow channel structure, and a key performance parameter of the heat exchange device is a heat dissipation area in contact with a working medium. Due to the limitation of the draft direction of die casting, the heat dissipation flow channel structure can only practically adopt a tapered design that gradually decreases from the bottom to the top, and due to the above wall thickness limitation, a heat dissipation flow channel wall (while also acting as a heat dissipation fin) also has the problem of a large wall thickness and a high heat capacity, and its heat dissipation area has no advantage compared with a thinner heat dissipation fin. In addition, a welding procedure for the cavity cover plate 110 and the cavity bottom plate 120 which are made of the aluminum alloy by the high-pressure casting process is limited, and semi-fusion welding such as friction stir welding is usually used, resulting in a relatively large cross-sectional area of a weld seam. Moreover, the fluid cavity formed after welding also needs to be mounted with electrical components, and mounting structures (e.g., threads and mounting planes) for mounting the electrical components need to be machined on the fluid cavity, resulting in a complicated manufacturing process and an increased cost.

To solve the above problems, in the present application, the cavity cover plate 110, the cavity bottom plate 120 and the fin plate 130 may all be stamped parts and fixed to each other by brazing. The cavity cover plate 110, the cavity bottom plate 120, and the fin plate 130 may be made of the same material, and for example, may all be aluminum alloy plates.

By forming the cavity cover plate 110, the cavity bottom plate 120 and the fin plate 130 by stamping, the strength, rigidity and heat transfer performance of the material can be preserved as much as possible, and thus the cavity cover plate 110, the cavity bottom plate 120 and the fin plate 130 can be made to have a thinner wall thickness than that of an aluminum alloy high-pressure casting member, so that the stamped parts and the electric heater have the advantage of being lightweight. For example, a heat exchange area of the fin plate 130 is increased by about 25% compared with a high-pressure casting member of the same size, so that the heating cavity assembly 100 can be reduced in weight by 40% or more and the electric heater can be reduced in weight by 20% or more. To further increase the rigidity, the cavity cover plate 110 may be provided with first longitudinal reinforcing ribs 117 and/or the cavity bottom plate 120 may be provided with second longitudinal reinforcing ribs 123.

Brazing is a method of joining welded parts by using a metal material having a lower melting point than the welded parts as a brazing filler metal, comprising heating the welded parts and the brazing filler metal to a temperature higher than the melting point of the brazing filler metal and lower than the melting point of the welded parts, wetting a parent material with the liquid brazing filler metal, filling a gap between joints and performing interdiffusion in the parent material. Brazing has wide adaptability and may weld most metals and some nonmetals; the accessibility of brazing is good, and weld seams that are inaccessible in space can be completed by brazing; the precision of brazing is high, and for high-precision and complex parts, a plurality of welds can be completed by one-time welding, and the efficiency is high; the heating temperature of brazing is much lower than the fusion welding temperature and has less impact on the structure and properties of a parent material; and the deformation of a welded part is small, and particularly for brazing using uniform heating, the welding deformation can be minimized, so that the dimensional accuracy of the welded part can be easily ensured. By brazing, the cavity cover plate 110, the cavity bottom plate 120 and the fin plate 130 can be well connected and fixed to each other by one-time welding.

In addition, as shown in FIG. 3, the heating cavity assembly 100 further includes an electrical support plate 140 and temperature sensor seats 150 (the temperature sensor seats 150 may be arranged in a corresponding number corresponding to the number of temperature sensors, for example, in an embodiment shown in FIG. 2, the PCB assembly 500 may include an outlet temperature sensor 510, a middle temperature sensor 520, and an inlet temperature sensor 530 so that three temperature sensor seats 150 are brazed on the cavity cover plate 110), and the electrical support plate 140 and the temperature sensor seats 150 can be fixed to the cavity cover plate 110 by brazing while brazing the cavity cover plate 110, the cavity bottom plate 120, and the fin plate 130 to form the heating cavity assembly 100. Therefore, the heating cavity assembly of the present application does not require machining and cleaning processes, and the process complexity and manufacturing costs are reduced.

During welding, the cavity cover plate 110, the fin plate 130, and the cavity bottom plate 120 form brazed joints at portions where they are in contact with each other. The cavity cover plate 110 and the cavity bottom plate 120 are each provided with a flange 122 at the periphery and are in contact and form brazed joints at the flanges 122, thereby forming a closed cavity. The process is furnace brazing, uses a reducing gas or an inert gas for protection during welding, and uses a continuous brazing furnace.

In the present application, the cavity cover plate 110 and the fin plate 130 may be fixed to each other by welding in place. Preferably, the cavity cover plate 110 is fixed at least to the top of the fin plate 130. For example, the cavity cover plate 110 is in contact with and fixed to the fin plate 130 only at the top surface of the fin plate 130, i.e., the isolation grooves 111 are not fixed to the fin plate 130, as shown in FIG. 12. In an embodiment of FIG. 12, adjacent primary fluid channels C21 may have a certain degree of communication therebetween such that a fluid medium may be distributed among different primary fluid channels C21, improving the flow uniformity of the fluid medium in the primary fluid channels C21. To further increase the rigidity, the isolation grooves 111 may also be fixed to the fin plate 130 (e.g., fixed to the connecting portion 132 of the fin plate 130) by recessed bottom. A position where the cavity cover plate 110 is fixed to the fin plate 130 may be selected according to the flow distribution of each primary fluid channel C21, the temperature balance of the heating element, and the placement requirements of the middle temperature sensor.

In the present application, the fluid medium may be a suitable heat transfer medium, for example, a 50% ethylene glycol solution, commonly known as an antifreeze solution. The electric heater of the present application may be used in suitable applications, for example in a thermal management system for a vehicle, or in a thermal management system for an energy storage system.

According to another aspect of the present application, provided is a thermal management system, including the electric heater of the present application.

According to another aspect of the present application, provided is an electric vehicle, including the thermal management system of the present application, the electric vehicle being a hybrid vehicle or a pure electric vehicle.

According to another aspect of the present application, provided is an energy storage system, including the thermal management system of the present application, the energy storage system being an electrochemical energy storage system employing a storage battery.

The preferred embodiments of the present application are described in detail above, however, the present application is not limited to the specific details in the above embodiments, in the technical concept range of the present application, the technical solution of the present application can be subjected to various simple variations, and these simple variations all belong to the protection range of the present application.

In addition, it should be noted that the specific technical features described in the above specific embodiments can be combined in any appropriate mode without contradiction, and in order to avoid unnecessary repetition, various possible combinations are not described any more in the present application.

In addition, various different embodiments of the present application can also be combined at will, and as long as the embodiments do not violate the idea of the present application, the combined embodiments also should be regarded as the contents disclosed by the present application.

## Claims

1. An electric heater, comprising a heating cavity assembly (100), wherein the heating cavity assembly (100) comprises a cavity cover plate (110), a cavity bottom plate (120) and a fin plate (130) arranged between the cavity cover plate (110) and the cavity bottom plate (120), the fin plate (130) comprises a plurality of flow channel areas spaced apart from each other, and the cavity cover plate (110) is provided with spaced isolation grooves (111) corresponding to the interval of the flow channel areas.

2. The electric heater of claim 1, wherein the cavity cover plate (110) is fixed at least to the top of the fin plate (130).

3. The electric heater of claim 2, wherein the cavity cover plate (110) divides a cavity between the cavity cover plate (110) and the cavity bottom plate (120) into a plurality of primary fluid channels C21 by the isolation grooves (111), and a plurality of secondary fluid channels C22 is formed in each primary fluid channel C21 by the fin plate (130).

4. The electric heater of claim 3, wherein the cavity comprises an inlet flow channel and an outlet flow channel, the cavity cover plate (1 10) is provided with an inlet (112) communicating with the inlet flow channel and an outlet (113) communicating with the outlet flow channel, and the cavity cover plate (110) is provided with a guide structure for guiding a fluid medium from the inlet flow channel to uniformly flow to each of the primary fluid channels C21.

5. The electric heater of claim 4, wherein the guide structure comprises a first guide slot (114) extending from one end of the cavity cover plate (110) towards the other end.

6. The electric heater of claim 5, wherein the depth of the first guide slot (114) is smaller than the height of the fin plate (130) and/or the first guide slot (114) is gradually closer to an edge of the inlet flow channel from said one end of the cavity cover plate (110) towards said other end.

7. The electric heater of claim 5, wherein an end of the first guide slot (114) is spaced apart from an end of the inlet flow channel, and a second guide slot (115) for blocking the fluid medium is arranged between the end of the first guide slot (114) and the end of the inlet flow channel; and/or, the first guide slot (114) has portions with different depths along the extension direction of the first guide slot (114).

8. The electric heater of claim 3, wherein the fin plate (130) comprises a plurality of rows of fins extending in a length direction, and adjacent rows of the fins are staggered.

9. The electric heater of claim 3, wherein the cavity cover plate (110) is provided with end grooves (116) distributed at both ends of the fin plate (130), and the end grooves (116) are fixed to the cavity bottom plate (120) to separate the inlet flow channel from the outlet flow channel.

10. The electric heater of claim 1, comprising an upper cover (200) disposed at an upper side of the heating cavity assembly (100), a lower cover (300) disposed at a lower side of the heating cavity assembly (100), a heating element (400) disposed between the heating cavity assembly (100) and the lower cover (300), a PCB assembly (500) disposed between the heating cavity assembly (100) and the upper cover (200), a blade type high-voltage connector (900) connected to the PCB assembly (500) in a manner of passing through the upper cover (200), and an electrode (600) connecting the heating element (400) and the PCB assembly (500), wherein the cavity cover plate (110) and the cavity bottom plate (120) are each provided with an electrode via hole (121) for allowing the electrode (600) to pass through.

11. The electric heater of any one of claims 1-10, wherein the cavity cover plate (110), the cavity bottom plate (120) and the fin plate (130) are all stamped parts and fixed to each other by brazing.

12. A thermal management system, comprising the electric heater of any one of claims 1-11.

13. An electric vehicle, comprising the thermal management system of claim 12, the electric vehicle being a hybrid vehicle or a pure electric vehicle.

14. An energy storage system, comprising the thermal management system of claim 12, the energy storage system being an electrochemical energy storage system employing a storage battery.
